Europäisches Patentamt

(19) European Patent Office

Office européen des brevets

(11) Veröffentlichungsnummer: **0 028 828**
**A2**

(12) **EUROPÄISCHE PATENTANMELDUNG**

(21) Anmeldenummer: 80106891.7

(22) Anmeldetag: 08.11.80

(51) Int. Cl.³: **E 04 C 2/16**
**B 32 B 21/10**

(30) Priorität: 12.11.79 DE 7931883 U

(43) Veröffentlichungstag der Anmeldung:
20.05.81 Patentblatt 81/20

(84) Benannte Vertragsstaaten:
AT CH FR GB LI NL

(71) Anmelder: Holzwerke H. Wilhelmi GmbH & Co. KG

D-6335 Lahnau(DE)

(72) Erfinder: Wilhelmi, Günther
In den Weinbergen 8
D-6335 Lahnau 2(DE)

(74) Vertreter: Patentanwälte Dipl.-Ing. R. Schlee Dipl.-Ing.
A. Missling
Bismarckstrasse 43
D-6300 Giessen(DE)

(54) Bauplatte.

(57) Bauplatte ($P_1$), insbesondere Deckenplatte für abgehängte Decken, mit einem grobporigen Plattenkern (6), z.B. aus Holzspänen, und einer dünnen Deckschicht (7) aus einem feinporigen Material auf mindestens einer Plattenseite, welche Deckschicht (7) vorwiegend aus durch ein Bindemittel miteinander verbundenen mineralischen Bestandteilen zusammengesetzt ist. Die Bauplatte ($P_1$) ist an mindestens einer Umfangsfläche (5) mit einer Deckschicht (8) aus einem feinporigen Material versehen, das vorwiegend aus mineralischen Bestandteilen zusammengesetzt ist, die durch ein Bindemittel miteinander verbunden sind.

Die Bauplatte ($P_1$) ermöglicht bei guter Brandsicherheit eine bequeme Verarbeitung, da die Deckschicht (8) bei einem Zuschneiden der Platte ($P_1$) auf passende Maße kein Hindernis bildet. Die Bauplatte ($P_1$) ist in ästhetischer Hinsicht voll befriedigend, da der grobporige Plattenkern (6) durch die Deckschicht kaschiert ist.

FIG. 1

**0028828**

**PATENTANWÄLTE**
**DIPL.-ING. R. SCHLEE**
**DIPL.-ING. A. MISSLING**
Bismarckstraße 43
D-6300 GIESSEN

6300 Gießen, 29.10.1980
S/G 14.208

Holzwerke H. Wilhelmi GmbH & Co. KG

6335 Lahnau-Dorlar 2

## Bauplatte

Beschreibung:

Die Erfindung bezieht sich auf eine Bauplatte, insbesondere auf eine Deckenplatte für abgehängte Decken, mit einem grobporigen Plattenkern, z.B. aus Holzspänen, und einer dünnen Deckschicht aus einem feinporigen Material auf mindestens einer Plattenseite, welche Deckschicht vorwiegend aus durch ein Bindemittel miteinander verbundenen mineralischen Bestandteilen zusammengesetzt ist. Bauplatten dieser Art können unter anderem auch als Wandplatten und als Platten zur Herstellung von Schrankwänden verwendet werden.

Bauplatten mit einer Deckschicht der genannten Beschaffenheit sind für den Feuerschutz vorteilhaft. Bei vielen Anwendungsfällen der Bauplatten müssen auch die Umfangsflächen, d.h. die schmalen Stirnflächen, beschichtet werden, damit sie ästhetischen Forderungen entsprechen, nämlich in der Regel dann, wenn die Umfangsflächen sichtbar sind.

Bisher hat man zur Beschichtung der Umfangsflächen Umleimer verwendet, die aus Holzfurnieren oder aus Kunststoff, z.B. Polyvinylchlorid (PVC), oder aus mit Kunststoff, z.B. Melaminharz, getränktem Papier, oder aus einem Blechstreifen bestehen. Von den bekannten Umleimern sind nur solche aus

- 2 -

Blech hinsichtlich des Feuerschutzes zufriedenstellend. Alle anderen Umleimer sind brennbar und erhöhen demgemäß die Feuergefährlichkeit von Räumen, in die solche Platten eingebaut sind. Umleimer aus Blech sind wegen der relativ großen Steifigkeit des Materials schwerer zu verarbeiten als andere Umleimer. Bauplatten mit Umleimern aus Blech lassen sich auch weniger leicht zerschneiden als Platten mit anderen Umleimern, wodurch die Verarbeitung wesentlich erschwert wird. Nachteilig ist auch, daß der Wärmeausdehnungskoeffizient von Metallblech sehr verschieden vom Wärmeausdehnungskoeffizienten des Plattenmaterials ist, so daß sich der Umleimer im Laufe der Zeit von der Platte lösen kann.

Der Erfindung liegt die Aufgabe zugrunde, eine Bauplatte der eingangs genannten Art so auszubilden, daß bei guter Brandsicherheit der Platte eine bequeme Verarbeitung möglich ist.

Diese Aufgabe wird nach der Erfindung dadurch gelöst, daß mindestens eine der Umfangsflächen der Platte eine Deckschicht aus einem feinporigen Material aufweist, das vorwiegend aus mineralischen Bestandteilen zusammengesetzt ist, die durch ein Bindemittel miteinander verbunden sind.

Eine so ausgebildete Bauplatte läßt sich ebenso leicht verarbeiten wie eine Bauplatte, die einen Umleimer überhaupt nicht aufweist oder aber einen Umleimer aus einem leicht zerschneidbaren Material. Die Verwendung vorwiegend mineralischer Bestandteile für die Deckschicht ergibt eine gute Brandsicherheit der Bauplatte. Die Bauplatte ist in ästhetischer Hinsicht voll befriedigend, da der grobporige Plattenkern durch die Deckschicht rundum kaschiert werden kann.

Vorzugsweise hat die Deckschicht auf den Umfangsflächen die gleiche Zusammensetzung wie die Deckschicht auf der Plattenseite (Anspruch 2). Dies jedoch ist keine Voraussetzung für die Realisierung der Erfindung. Für die Deckschicht der Umfangsfläche kann auch ein anderes Material verwendet werden als für die Deckschicht der Plattenseite. Wesentlich ist nur, daß die Deckschicht der Umfangsfläche im wesentlichen aus mineralischen Bestandteilen zusammengesetzt und damit brandgeschützt ist.

Bei einer bevorzugten Ausführungsform (Anspruch 3) besteht die Deckschicht auf den Umfangsflächen aus Streifen, die durch Klebung mit dem Plattenkern verbunden sind. Als Kleber kommen die in den Ansprüchen 4 und 5 angegebenen Materialien in Betracht. Bei der Ausführungsform nach Anspruch 3 wird die Deckschicht der Umfangsflächen separat zum Plattenkern hergestellt und nachträglich am Plattenkern befestigt. Unter die Erfindung fallen aber auch Ausführungen, bei denen die Deckschicht unmittelbar auf die Umfangsflächen aufgetragen ist.

Für die Deckschicht an den Umfangsflächen kommen verschiedene Materialien in Betracht, so z.B. ein Glasfaservlies (Anspruch 6) oder ein Vlies aus einer Gesteinsphase (Anspruch 7).

Bei einer vorteilhaften Ausführungsform der Erfindung (Anspruch 8) sind die Deckschicht auf der Plattenseite und die Deckschicht an den Umfangsflächen mikroporös und schallschluckend. Die Bauplatte ist dadurch insgesamt schallschluckend, wie dies an sich bekannt ist. Eine geeignete mikroporöse Folie oder ein entsprechender mikroporöser Überzug kann entsprechend dem in der DE-PS 926 090 angegebenen Verfahren beschaffen sein. Die Porengröße der Deckschichten kann dabei im Bereich von 0,001 mm bis 0,1 mm liegen (Anspruch 9). Das spezifische Flächengewicht der Deckschicht auf den Umfangsflächen kann in weiten Grenzen variieren, die im Anspruch 10 angegeben sind.

Die Erfindung ist bei verschiedenen Plattenformen möglich. So können die Platten genutet sein, wobei gemäß Anspruch 11 die Wände der Nut durch das Material des Plattenkerns gebildet sind. Man spart sich dadurch die Schwierigkeiten, die das Anbringen einer Deckschicht in einer Nut mit sich bringen würden. Optische Nachteile entstehen nicht, da die Nut bei eingebauter Platte ohnehin verdeckt ist. Eine Platte mit Falz ist vorzugsweise gemäß Anspruch 12 ausgebildet. Auch dies ist optisch ohne Nachteil, da die zur allgemeinen Plattenebene parallele Fläche der Ausfalzung bei eingebauter Platte verdeckt ist. Die Umfangsflächen können sowohl rechtwinklig zur allgemeinen Plattenebene verlaufen als auch schräg (Anspruch 13).

In der Zeichnung sind Ausführungsbeispiele der Erfindung dargestellt. Es zeigen:

Fig. 1    eine perspektivische Ansicht eines Teiles einer erfindungsgemäßen Platte, wobei eine Deckschicht teilweise abgelöst ist,

Fig. 2    eine perspektivische Ansicht eines Teiles einer Platte mit schrägen Umfangsflächen,

Fig. 3    eine perspektivische Ansicht eines Teiles einer Platte mit einer Nut an einer Plattenkante und

Fig. 4    eine perspektivische Teilansicht einer Platte mit ausgefalzten Plattenkanten.

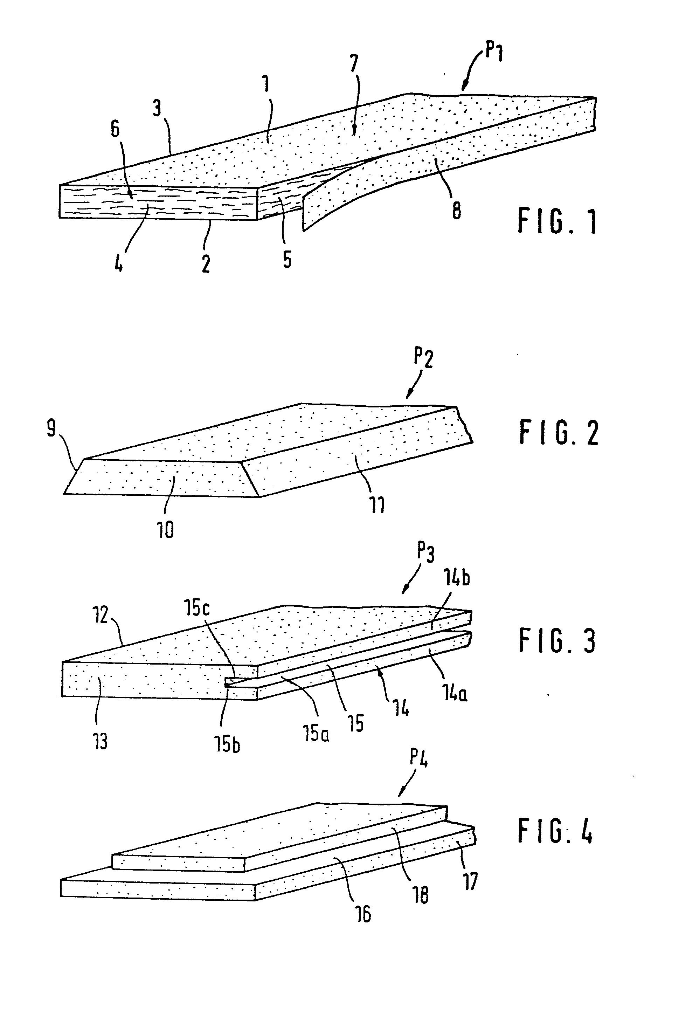

Die Platte $P_1$ nach Fig. 1 hat eine rechteckige Grundform. Die Seitenflächen der Platte sind mit 1 und 2 bezeichnet. Von den Umfangsflächen sind nur drei Umfangsflächen 3, 4 und 5 zu sehen, während die zur Umfangsfläche 4 parallele Umfangsfläche weggebrochen ist. Im Rahmen dieses Textes werden als Umfangsflächen diejenigen Flächen bezeichnet, die bei geometrisch weniger exakter Ausdrucksweise auch als Plattenkanten bezeichnet werden. Unter Plattenseiten werden die großen Flächen, also z.B. die Flächen 1, 2 der Platte $P_1$ verstanden.

Die Platte hat einen Plattenkern 6, der verhältnismäßig grobporig ist und z.B. aus Holzspänen besteht, die zusammengepreßt und durch ein Bindemittel zusammengehalten sind.

Auf der Plattenseite 1 und eventuell auch auf der Plattenseite 2 befindet sich jeweils eine Deckschicht 7 aus einer vorzugsweise mikroporösen Folie, die unbrennbar ist und vorzugsweise aus einem Vlies besteht, das mittels eines Klebers mit dem Plattenkörper 6 verbunden ist.

Die Umfangsfläche 5 ist erfindungsgemäß mit einer Deckschicht 8 belegt. Es sei angenommen, daß die Deckschicht hier aus einem Streifen besteht, der durch Klebung mit dem Plattenkörper 6 verbunden ist. Um dies zu verdeutlichen, ist der Streifen am Ende der Umfangsfläche 5 abgelöst. Der Streifen kann aus verschiedenen Materialien bestehen, wie dies schon in der Beschreibungseinleitung ausgeführt wurde. Es sei angenommen, daß in diesem Fall die Deckschicht 7 und die Deckschicht 8 aus dem gleichen Material bestehen.

Die Erfindung ist bei verschiedenen Plattenformen anwendbar, wofür in den Fig. 2, 3 und 4 Beispiele gezeigt sind.

0028828

Die Platte $P_2$ nach Fig. 2 hat Umfangsflächen 9, 10, 11 und eine in der Zeichnung nicht sichtbare weitere zur Umfangsfläche 10 parallele Umfangsfläche. Die Umfangsfläche 10 verläuft rechtwinklig zur allgemeinen Plattenebene, während die Umfangsflächen 9 und 10 gegenüber der allgemeinen Plattenebene geneigt sind. Auch solche Umfangsflächen lassen sich ohne weiteres mit Deckschichten versehen. Bei der Platte $P_2$ sind alle Umfangsflächen mit Deckschichten ausgerüstet.

Die Platte $P_3$ nach Fig. 3 hat Umfangsflächen 12, 13 und 14. An der Umfangsfläche 14 befindet sich eine Nut 15. Die Wände 15a, 15b und 15c der Nut sind nicht mit einer Deckschicht belegt, während auf den an die Nutwände 15a und 15c anschließenden Flächen 14a und 14b eine Deckschicht angeordnet ist. Auch die Umfangsflächen 12 und 13 und die zur Umfangsfläche 13 parallele, in der Zeichnung nicht sichtbare Umfangsfläche, sind mit einer Deckschicht versehen.

Die Platte $P_4$ nach Fig. 4 hat abgestufte Randbereiche, d.h. die Platte ist an ihren Rändern ausgefalzt. Durch die Ausfalzung ist eine Fläche 16 entstanden, die zur allgemeinen Plattenebene parallel ist. Diese Fläche 16 ist frei von einer Deckschicht, während die an die Fläche 16 anschließenden Umfangsflächen 17 und 18 wieder mit einer Deckschicht versehen sind.

Ansprüche:

1. Bauplatte, insbesondere Deckenplatte für abgehängte Decken, mit einem grobporigen Plattenkern, z.B. aus Holzspänen, und einer dünnen Deckschicht aus einem feinporigen Material auf mindestens einer Plattenseite, welche Deckschicht vorwiegend aus durch ein Bindemittel miteinander verbundenen mineralischen Bestandteilen zusammengesetzt ist, dadurch gekennzeichnet, daß mindestens eine der Umfangsflächen der Platte ($P_1$, $P_2$, $P_3$, $P_4$) eine Deckschicht (8) aus einem feinporigen Material aufweist, das vorwiegend aus mineralischen Bestandteilen zusammengesetzt ist, die durch ein Bindemittel miteinander verbunden sind.

2. Bauplatte nach Anspruch 1, dadurch gekennzeichnet, daß die Deckschicht (8) auf den Umfangsflächen die gleiche Zusammensetzung und/oder die gleiche Dicke hat wie die Deckschicht (7) auf der Plattenseite (1).

3. Bauplatte nach einem der vorhergehenden Ansprüche, dadurch gekennzeichnet, daß die Deckschicht (8) auf den Umfangsflächen (5) aus Streifen besteht, die durch Klebung mit dem Plattenkern (6) verbunden sind.

4. Bauplatte nach Anspruch 3, dadurch gekennzeichnet, daß der Kleber ein Melaminharz, oder ein Harnstoffharz, oder ein Silikat, oder Resorcinharz ist.

5. Bauplatte nach Anspruch 3, dadurch gekennzeichnet, daß der Kleber ein Schmelzkleber ist, z.B. ein thermoplastischer Kunststoff.

6. Bauplatte nach einem der vorhergehenden Ansprüche, dadurch gekennzeichnet, daß die Deckschicht (8) auf den Umfangsflächen aus einem Glasfaservlies besteht.

7. Bauplatte nach einem der Ansprüche 1 bis 5, dadurch gekennzeichnet, daß die Deckschicht (8) auf den Umfangsflächen (5) aus einem Vlies aus einer Gesteinsphase, z.B.aus Basalt, besteht.

8. Bauplatte nach einem der vorhergehenden Ansprüche, dadurch gekennzeichnet, daß die Deckschicht (7) auf der Plattenseite (1) und die Deckschicht (8) an den Umfangsflächen (5) mikroporös und schallschluckend sind.

9. Bauplatte nach Anspruch 8, dadurch gekennzeichnet, daß die Porengröße der Deckschichten (7, 8) im Bereich von 0,001 mm bis 0,1 mm liegt.

10. Bauplatte nach einem der vorhergehenden Ansprüche, dadurch gekennzeichnet, daß das spezifische Flächengewicht der Deckschicht auf den Umfangsflächen 50 bis 400 g/m² beträgt.

11. Bauplatte nach einem der vorhergehenden Ansprüche, dadurch gekennzeichnet, daß an mindestens einer Plattenkante (14) eine Nut (15) angeordnet ist, wobei die Wände (15a, 15b, 15c) der Nut (15) durch das Material des Plattenkerns gebildet sind.

12. Bauplatte nach einem der Ansprüche 1 bis 10, dadurch gekennzeichnet, daß an mindestens einer Plattenkante ein Falz angeordnet ist, wobei die zur allgemeinen Plattenebene parallele Fläche (16) der Ausfalzung frei von einer Deckschicht ist, während die daran anschließenden Umfangsflächen (17, 18) mit einer Deckschicht versehen sind.

13. Bauplatte nach einem der vorhergehenden Ansprüche, dadurch gekennzeichnet, daß mindestens einige der Umfangsflächen (9, 11) relativ zur allgemeinen Plattenebene geneigt sind.

FIG. 1

FIG. 2

FIG. 3

FIG. 4